# FASCICULE DE BREVET EUROPEEN

(11) **EP 2 086 081 B1**
(45) Date de publication et mention de la délivrance du brevet: **16.03.2016**
(21) Numéro de dépôt: 09151298.8
(22) Date de dépôt: 26.01.2009
(51) Int. Cl.: H02G 5/06

(54) **Disque isolant de l'électricité pour soutenir un conducteur linéaire et ensemble électrique comprenant de disque**
Isolierscheibe gegen Elektrizität zur Unterstützung eines linearen Leiters und diese Scheibe umfassende elektrische Einheit
Electricity insulating disc for supporting a linear conductor and electric system comprising such a disc

(30) Priorité: 28.01.2008 FR 0850511
(43) Date de publication de la demande: 05.08.2009
(73) Titulaire: ALSTOM Technology Ltd, 5400 Baden (CH)
(72) Inventeur: Blatter, Johannes, 5014, GRETZENBACH (CH); Hiltbrunner, Hugo, 2824, VICQUES (CH); Palmieri, Gerardo, 5036, OBERENTFELDEN (CH); Lüscher, Robert, 5703, SEON (CH)
(74) Mandataire: Ilgart, Jean-Christophe

(56) Documents cités:
- WO-A-2006/037914

## Description

Le sujet de cette invention est un risque isolant de l'électricité destiné à soutenir un conducteur linéaire traversant un perçage de ce disque, ainsi qu'un ensemble électrique pourvu de ce disque.

De tels disques se retrouvent surtout dans les appareillages électriques à moyenne où haute tension afin de soutenir les conducteurs dans des câbles à isolation gazeuse ou des sous-stations électriques sous enveloppe métallique.

Il existe de nombreuses publications décrivant autant de conceptions de disques. La présente invention peut perfectionner les disques décrits dans le brevet WO 2006/037914 de la même déposante. Ce disque est construit en un polymère thermoplastique, plus précisément le téréphtalate de polyéthylène (PET) ; il est sensiblement plat. Si, comme on le verra, l'invention trouve un intérêt manifeste avec de tels disques, elle pourrait être appliquée à d'autres formes ou d'autres matières des disques.

Les disques de tels appareils électriques sont soumis à des conditions difficiles, notamment des champs électriques élevés, des températures élevées à cause du passage de l'électricité et une atmosphère souvent corrosive, un gaz spécial tel que l'hexafluorure de soufre (SF₆) étant souvent présent pour créer un environnement isolant autour du conducteur. Ils sont donc sujets à une dégradation avec le temps, à des sollicitations mécaniques et des déformations importantes aggravées par le travail à haute température et à des déformations dues aux dilatations thermiques surtout en assemblage avec d' autres matériaux. Ces problèmes sont plus aigus avec une matière thermoplastique telle que le PET, qui se dilate plus que les polymères thermodurcissables qui sont beaucoup plus employés pour de tels disques.

Le but fondamental de l'invention est une optimisation du façonnement du disque pour faciliter l'utilisation des disques fabriqués en matières de grande dilatation thermique. C'est une optimisation à l'égard des propriétés diélectrique comme les décharges partielles d'électricité et la tension de maintien et une réduction des efforts qui agissent au disque ou aux éléments adjacents par l'allègement des contraintes dues aux dilatations thermiques durant l'exploitation.

On recourt à un disque et un appareillage associé particuliers, caractérisés par divers perfectionnements qui concourent souvent simultanément à plusieurs de ces objectifs.

Sous une forme générale, un aspect de l'invention est un disque isolant de l'électricité et destiné au support d'au moins un conducteur linéaire dans un appareillage électrique à moyenne ou haute tension comprenant encore une enceinte de soutien du disque, le disque comprenant au moins un perçage central pour ledit conducteur linéaire et deux faces principales opposées, caractérisé en ce que lesdites faces opposées sont essentiellement planes, excepté à une dépression centrale s'étendant autour du perçage et une dépression périphérique s'étendant à un bord du disque.

Le brevet mentionné précédemment décrivait un disque aux deux faces principales entièrement lisses, alors que le document DE 25 26 671 décrit un disque en dépression sur presque toute sa surface et dont les faces principales ne sont donc pas essentiellement planes. Cette dernière conception est inférieure à celle de l'invention puisqu'elle implique un affaiblissement général du disque. Elle s'en distingue aussi par l'absence de souplesse du montage du disque.

Une caractéristique importante de l'invention est un montage flottant, sans contrainte et donc souple à l'égard des dilatations thermiques, du disque dans l'appareillage.

Le disque de l'invention est en effet monté avec un jeu axial avec les brides de fixation et les électrodes du conducteur entre lesquelles il est intercalé. Quand il se dilate, il a la faculté de se déformer en occupant les jeux, donc avec une souplesse plus grande et des contraintes plus petites.

Un maintien du disque en position axiale peut toutefois être réalisé par des collerettes de petite largeur disposées sur la dépression périphérique ou la dépression centrale et qui butent contre les brides ou les électrodes.

La dépression centrale comprend avantageusement une face externe conique, une face de fond plane et une face interne cylindrique. La face externe conique favorise la chute de salissures qui pourraient favoriser les décharges partielles d'électricité.

Les dépressions sont généralement de dimensions réduites, juste assez pour assurer la souplesse en service et la réduction du champ électrique sans affaiblir le disque à l'excès. Chaque dépression périphérique peut ainsi avoir une largeur inférieure à 25% du rayon du disque, et chaque dépression centrale une profondeur comprise entre 10 et 20% de l'épaisseur du disque, sur chacune des faces principales. De même, chaque dépression périphérique peut avoir une profondeur comprise entre 5 et 10% de l'épaisseur du disque sur chacune des faces principales, et la distance entre la face externe de chaque dépression centrale et le conducteur qui traverse le perçage central est inférieure à 15% du rayon du disque.

L'invention concerne encore un ensemble électrique comprenant au moins un conducteur linéaire, un disque isolant ayant un perçage traversé par le conducteur linéaire, et une paire de brides assemblées entre elles et entre lesquelles le bord du disque est retenu, caractérisé en ce que le disque est séparé des brides par des jeux et comprend une dépression centrale sur chacune des deux faces principales autour du perçage.

Le disque de cet ensemble peut être conforme aux spécifications précédentes.

Si les électrodes du conducteur linéaire, qui sont disposées devant les faces principales du disque, s'étendent aussi devant une partie de la dépression centrale de chaque côté, le caractère diélectrique du disque est renforcé.

Quand les collerettes internes existent, il est avantageux que les électrodes soient en appui sur elles afin de donner une référence de position axiale au disque. Il est alors aussi avantageux qu'un joint élastique soit comprimé entre une des collerettes et l'électrode correspondante, afin de préserver la souplesse du montage. Ce joint élastique peut être torique, l'électrode contre laquelle il est comprimé pourvue d'un chanfrein conique en dépouille vers le conducteur linéaire, de sorte que le joint est retenu dans un logement à section triangulaire et comprimé aussi contre le conducteur linéaire.

Il est avantageux que le conducteur linéaire traverse le perçage du disque avec un jeu, ce qui assure la ventilation de l'espace entre le conducteur et le disque pour éviter l'inclusion d'air.

Selon un autre perfectionnement, les électrodes ont une partie externe saillant en direction du disque et débordant autour de la collerette intérieure dans la dépression centrale.

Le disque peut aussi être soulagé si une rainure d'éventement est disposée le long de son perçage central, et un perçage prolongeant la rainure d'éventement est situé dans une des électrodes en débouchant dans un volume libre, ce qui permet de faire entrer le gaz environnant, généralement isolant, dans le jeu entre le conducteur linéaire et le perçage du disque.

Le bord du disque peut comprendre des perçages périphériques recevant des tubes de support et des boulons de serrage traversant les brides et les tubes de support. Conformément aux conceptions de l'invention, il est avantageux que les perçages périphériques reçoivent les tubes de support en saillie pour assurer une souplesse axiale. les tubes de support étant alors en butée sur les brides pour définir l'écartement entre les brides et maintenir le jeu axial avec le bord du disque. Cela permet au disque de se dilater en épaisseur sans contraindre les boulons de serrage des brides.

Des collerettes extérieures peuvent toutefois être en appui sur les brides pour éviter un montage trop flottant du disque. Leur déformation est possible pendant l'assemblage pour compresser des tolérances et en service par suite de dilatations thermiques. La finesse des collerettes donne une force de déformation réduite, et les boulons de serrage ne sont pas surchargés.

Les collerettes extérieures peuvent entourer des joints d'étanchéité entre les disques et les brides. Il est alors possible de pourvoir les faces principales du disque de rainures radiales passant sous des lèvres internes de ces joints d'étanchéité pour éventer des volumes compris entre ces joints et le disque.

L'invention sera maintenant décrite en liaison aux figures, qui en illustrent une réalisation particulière.

Parmi ces figures :
- la figure 1 illustre une vue générale d'un disque en coupe longitudinale,
- la figure 2 illustre le disque en vue' de face,
- la figure 3 illustre le disque monté dans les brides et autour d'un conducteur,
- le figure 4 illustre le centre du disque,
- les figures 5 et 6 illustrent sa périphérie,
- et les figures 7 et 8 illustrent deux variantes de réalisation.

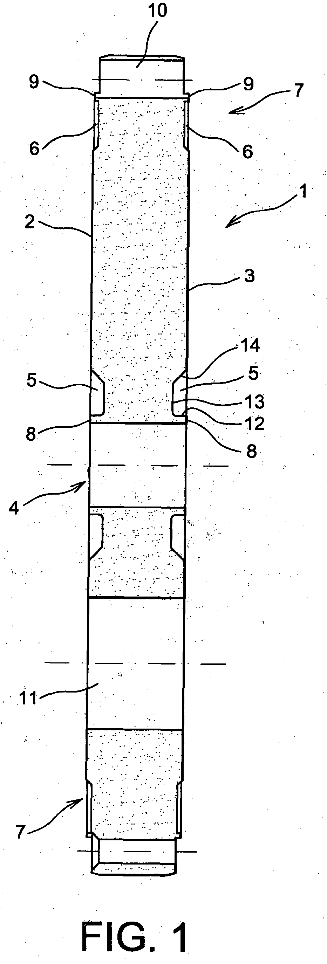

Le disque apparaît isolé à la figure 1. Il peut être construit en téréphtalate de polyéthylène (PET) conformément à l'enseignement du brevet précédent ; cette matière a un coefficient de dilatation élevé qui justifie particulièrement l'invention.

Le disque est produit par extrusion et usinage et possède une forme généralement plate entre deux faces principales 2 et 3 planes et parallèles. Il comprend toutefois un perçage 4 central et, sur chacune des faces principales 2 et 3, une dépression centrale 5 entourant le perçage central 4 et une dépression périphérique 6 établie à un bord 7 du disque 1. Les dépressions 5 et 6 sont annulaires. La dépression centrale 5 est séparée du perçage central 4 par des collerettes intérieures 8 de peu de largeur et affleurant au niveau des faces principales 2 et 3 (hors des dépressions 5 et 6). Il est cependant possible que la collerette intérieure 8 soit un peu en renfoncement par rapport à cette plus grande partie, de quelques dixièmes de millimètre, afin qu'elle soit protégée avant le montage du disque 1. De même, la dépression périphérique 6 possède une collerette extérieure 9 affleurant à la plus grande partie de face principale 2 ou 3. Le disque 1 est encore traversé de perçages périphériques 10 à l'extérieur de la collerette extérieure 9 et éventuellement (quoique seulement dans certaines réalisations particulières) d'une ouverture centrale 11 de communication de gaz de part et d'autre du disque 1. Le disque pourrait aussi avoir des faces principales ondulées ou en gradins circulaires.

La dépression centrale 5 comprend une face intérieure 12 cylindrique limitant la collerette intérieure 8, une face de fond 13 plate et une face extérieure 14 conique.

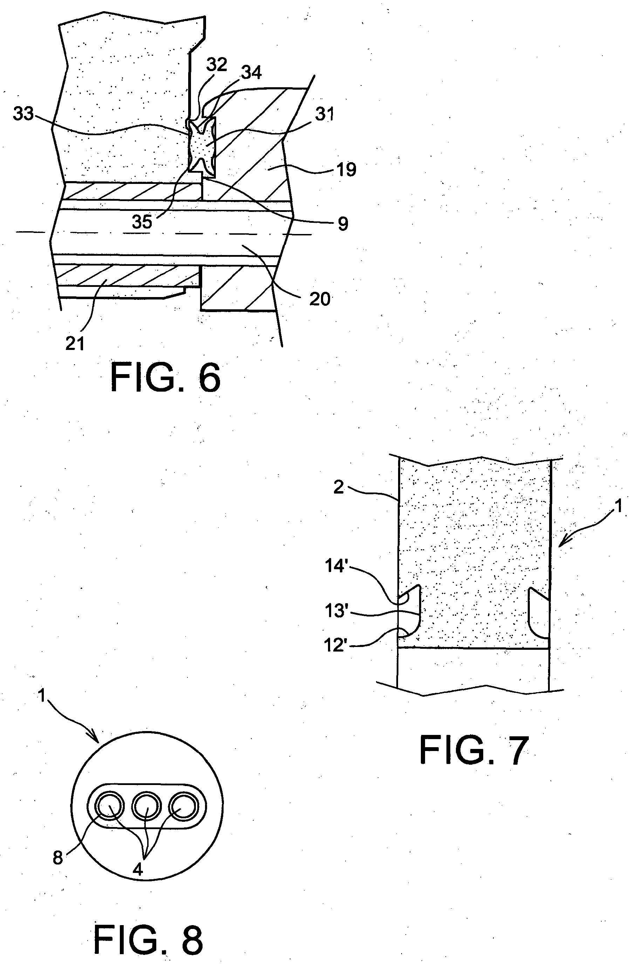

Parmi d'autres formes possibles, la face intérieure 12' et la face de fond 13' peuvent, être semi-toriques au moins en partie, et la face extérieure 14' peut être conique encore (ce qui permet mieux de l'abriter de la poussière) comme on le représente à la figure 7.

Les dépressions 5 et 6 sont petites, par rapport à la superficie du disque 1, afin de ne pas compromettre sa rigidité et solidité.

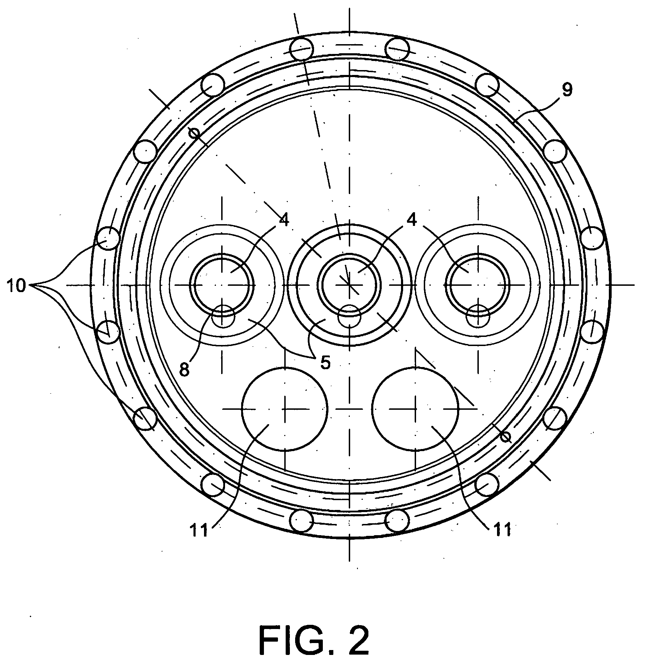

La figure 2 montre que l'invention peut comprendre plusieurs perçages centraux identiques à 4, ici trois, qui sont agencés sur un diamètre, et plusieurs ouvertures de gaz 11. Leurs nombres ne sont cependant pas critiques. Dans le cas de plusieurs perçages centraux 4, les dépressions centrales 5 pourraient être remplacées par une dépression centrale commune 5' d'après la figure 8, qui englobe tous les perçages centraux 4 et leurs collerettes 8.

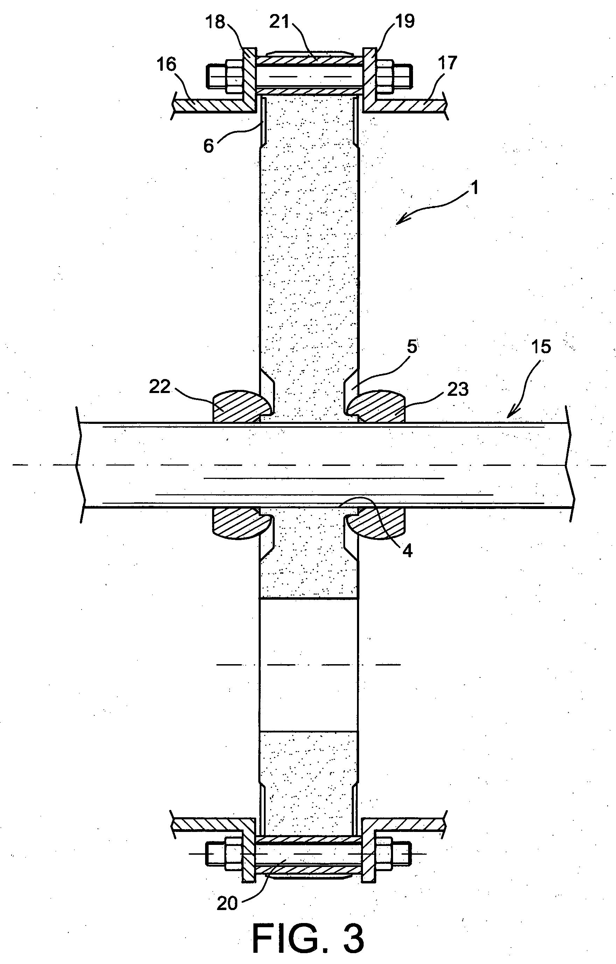

La figure 3 représente de façon schématique l'appareillage électrique dans lequel le disque 1 trouve emploi, avec un conducteur linéaire 15 traversant chaque perçage central 4 avec un petit jeu diamétral (0,2 mm environ) et des gaines 16 et 17 (ou des enceintes d'une autre forme) munies de brides 18 et 19 en regard unies entre elles par des boulons 20 traversant les perçages périphériques 10. L'agencement comprend des tubes de support 21, traversant les perçages périphériques 10 dans lesquels les tiges des boulons 20 sont enfilées pour définir l'écartement des brides 18 et 19. Enfin, des électrodes 22 et 23 sont établies des deux côtés du conducteur 15 en saillant autour de lui.

Les objectifs de l'invention sont atteints notamment par les caractéristiques suivantes :
A) Un montage flottant du disque 1 est réalisé : les dépressions centrales 5 dérobent le contact avec les électrodes 22. Les électrodes 22, 23 s'appuient directement sur les collerettes 8, qui sont déformables et aptes à compenser les tolérances dimensionnelles et la dilatation thermique. Dans une variante, les électrodes 23 sont fixées aux collerettes par des joints 28 décrits plus loin. De même, les dépressions périphériques 6 dérobent le contact avec les brides 18 et 19. Pour l'ajustement axial initial du disque 1, la collerette extérieure 9 est en contact avec les brides 18 et 19. La collerette extérieure 9 finit à peu près au même niveau que les faces principales 2 et 3 et les tubes de support 21. La collerettes extérieure 9 est déformable afin de compenser les tolérances et l'expansion thermique sous peu d'efforts.
B) Le champ électrique est limité et réduit d'une distance appropriée entre les surfaces des dépressions centrales 5 et les électrodes 22 et 23.
C) Les décharges partielles sont évitées en évitant les poches d'air dans les assemblages : le volume entre les conducteurs et le disque 1 est éventé par un jeu de 0,2 mm entre le conducteur 15 et le perçage central 4 et par un perçage d'éventement 30 dans l'électrode 22, un chanfrein (1mm à 45°) d'un côté de la collerette 8 et une rainure d'éventement 29 ; et encore par une rainure d'éventement 32 à la lèvre intérieure 34 d'un joint d'étanchéité 31 (tout cela décrit plus en détail plus loin).

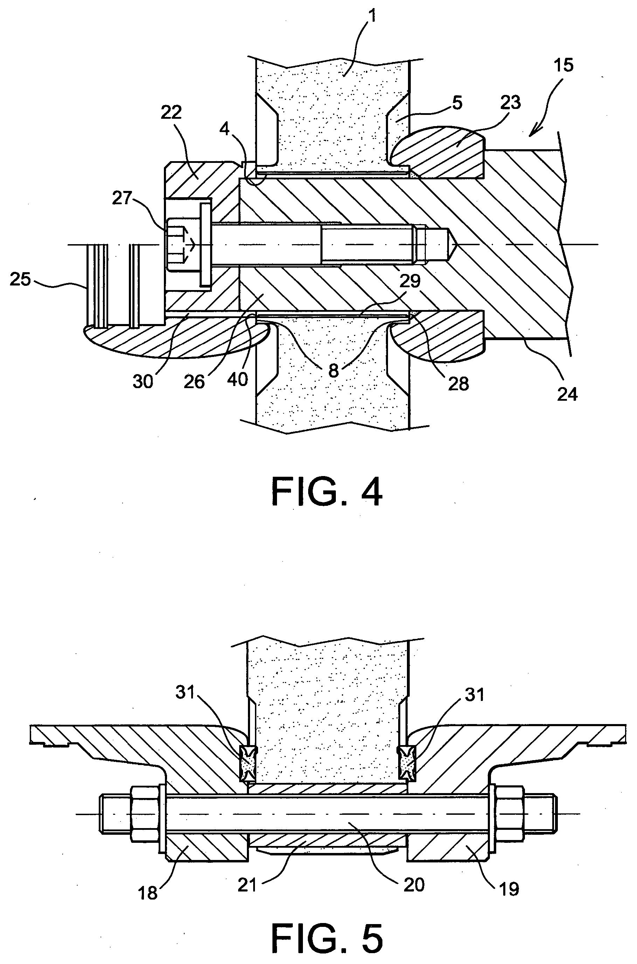

On se reporte aux figures 4 et 5. Le conducteur 15 est formé de deux tronçons 24 et 25 dont le premier comprend une fiche 26 cylindrique enfoncée à travers le perçage central 4 et dont le second est serti dans l'électrode 22 correspondante. La liaison du conducteur 15 se fait par une vis 27 de fixation de l'électrode 22 contre la fiche 26, établissant le contact mécanique et électrique dans le conducteur 15. Les électrodes 22 et 23 s'appuient contre les collerettes intérieures 8. Le montage comprend aussi un joint 28 élastique et torique comprimé entre l'électrode 23 et la collerette intérieure 8 correspondante. La collerette 23 est pourvue d'un chanfrein conique qui délimite un logement de section triangulaire pour le joint 28, qui est aussi comprimé radialement vers l'intérieur contre la fiche 26. Une butée trop rigide des collerettes 8 contre les électrodes 22 et 23 est ainsi évitée : le joint 28 compense les dilatations thermiques tout en assurant l'étanchéité au gaz de part et d'autre du disque 1. Le dispositif comprend enfin une rainure d'éventement 29 axiale dans une génératrice du perçage central 4, qui s'étend d'un bout à l'autre du perçage central 4 et se prolonge à travers l'électrode 22 opposée au joint 28 par un perçage d'éventement 30, et un chanfrein 40 (1mm de large à 45) au rayon intérieur de la collerette intérieure 8 joignant la rainure d'éventement 29 au perçage d'éventement 30.

Les dépressions centrales 5, s'étendant devant les électrodes 22 et 23 et autour d'elles, en direction radiale, réduisent la superficie de contact entre celles-ci et le disque 1, le champ électrique et les risques de claquage. Les électrodes 22 et 23 peuvent toutefois sans inconvénient comprendre des protubérances circulaires 37 à leur périphérie, qui s'enfoncent dans les dépressions centrales 5 pour assurer un maintien meilleur de l'assemblage et pour réduire le champ électrique local. Les dépressions centrales 5 devraient être à la fois petites pour ne pas affaiblir trop le disque 1 et assez grandes pour réduire le champ électrique. En pratique, leur largeur (en direction radiale du disque 1) est sensiblement plus grande que leur profondeur (en direction de l'épaisseur du disque 1) pour respecter cette double exigence, le champ électrique étant produit surtout en direction radiale, vers les gaines 16 et 17.

La figure 5 illustre plus en détail le montage périphérique du disque 1. On distingue en particulier des joints d'étanchéité 31 comprimés entre le bord du disque 1 et les brides respectives 18 et 19. Ces joints d'étanchéité 31 s'appuient radialement aussi avantageusement sur les collerettes extérieures 9, qui les entourent, ce qui facilite le montage du disque 1.

La largeur (dimension radiale) des collerettes extérieures 9 peut être optimisée (à quelques millimètres dans la pratique courante) de façon à être assez grande pour que les collerettes extérieures 9 résistent aux forces axiales dues aux conducteurs ou à des appareils fixés sur le disque 1, et aussi par une pression de gaz d'un seul côté du disque pendant le remplissage de gaz (dans les réalisations où le disque est continu) mais assez petite pour que lesdites collerettes 9 puissent se déformer de façon à compenser les tolérances d'usinage et les dilatations thermiques en service, sans que les boulons 20 soient trop contraints. Les collerettes extérieures 9 servent alors de support au disque 1 sans imposer de forces de réaction excessives aux boulons de serrage 20.

La déformation de serrage de l'assemblage est alors essentiellement reportée sur les collerettes extérieures 9, alors qu'une déformation plastique des boulons 20 a pu être observée en essais avec des collerettes extérieures 9 trop larges après les dilatations thermiques importantes subies par le disque 1 aux températures de service de l'installation. Une bonne largeur des collerettes extérieures 9 peut être calculée simplement d'après leur superficie en appui sur les brides 16 et 17, la section totale des boulons 20 et les caractéristiques respectives de résistance des matériaux qui les constituent. Il est manifeste qu'une déformation plastique des boulons 20 serait catastrophique sur la qualité de l'assemblage, alors qu'une déformation plastique des collerettes extérieures 9 aura peu de conséquences puisqu'elles n'assurent pas l'étanchéité.

Ainsi, l'effort initial de serrage des boulons 20 passe par des brides 18 et 19 et les tubes de support 21 quand les collerettes extérieures 9 sont placées avec un jeu positif en regard des brides 18 et 19 ; mais quand un jeu négatif existe à l'origine ou par suite de dilatation d'origine thermique, des efforts de serrage sont appliqués aussi aux collerettes extérieures 9. Ces forces sont toutefois limitées, à 70% ou 80% de la force de serrage initiale des boulons 20, grâce à la largeur adaptée.

Ainsi que le montre la figure 6, une rainure d'éventement 32 peut être établie à la surface du disque 1 pour faire communiquer un volume 33 compris entre le disque 1 et le joint d'étanchéité 31, et aussi entre une lèvre intérieure 34 et une lèvre extérieure 35 concentrique du joint 31, avec le volume 36 interne à une des brides 19 en passant par-dessous la lèvre intérieure 33. L'étanchéité du joint 31 reste assurée par la lèvre extérieure 35 et d'autres lèvres comprimées contre la bride 19. Cette disposition permet à l'atmosphère isolante du volume 36 de s'introduire sous le joint 31.

Les dépressions périphériques 6 sont, comme les dépressions centrales 5, plus larges que profondes afin de réduire le champ électrique (essentiellement radial entre les surfaces du disque 1 et les brides 18 et 19) sans affaiblir trop le disque 1. Elles débordent donc quelque peu des brides 18 et 19 vers le centre du disque 1.

La réalisation décrite comporte des conducteurs 15 circulaires. Il serait possible d'appliquer l'invention à des conducteurs de section quelconque en modifiant la forme des perçages centraux, des dépressions centrales et des collerettes intérieures.

## Revendications

1. Disque (1) isolant de l'électricité et destiné au support d'au moins un conducteur (15) linéaire dans un appareillage électrique à moyenne ou haute tension comprenant encore une enceinte (16, 17) de soutien du disque, et des électrodes (22, 23) saillant autour du conducteur (15), le disque comprenant au moins un perçage central (4) pour ledit conducteur linéaire et deux faces principales (2, 3) opposées devant lesquelles s'étendent les électrodes (22, 23), lesdites faces opposées étant essentiellement planes, excepté à une dépression centrale (5) et une dépression périphérique (6) s'étendant à un bord du disque, **caractérisé en ce que** la dépression centrale (5) s'étend autour du perçage (4) et autour des électrodes en direction radiale.

2. Disque isolant de l'électricité selon la revendication 1, **caractérisé en ce qu'**il comprend une collerettes intérieure (8) disposée entre le perçage et la dépression centrale.

3. Disque isolant de l'électricité selon l'une quelconque des revendications 1 ou 2, **caractérisé en ce qu'**il comprend une collerette extérieure (9) disposée sur la dépression périphérique.

4. Disque isolant de l'électricité selon la revendication 2, **caractérisé en ce que** la dépression centrale comprend une face externe conique (14, 14'), une face de fond (13, 13') et une face interne (12, 12')

5. Disque isolant de l'électricité selon la revendication 4, **caractérisé en ce que** la face de fond (13) est plate.

6. Disque isolant de l'électricité selon l'une quelconque des revendications 1 à 5, **caractérisé en ce que** la distance entre un conducteur passant par le perçage central et une face externe (14) de la dépression centrale est inférieure à 15% d'un rayon du disque.

7. Disque isolant de l'électricité selon l'une quelconque des revendications précédentes, **caractérisé en ce qu'**il comprend une pluralité de perçage centraux (4) mais une seule dépression centrale (5') englobant tous les perçages centraux.

8. Disque isolant de l'électricité selon l'une quelconque des revendications 1 à 7, **caractérisé en ce que** la dépression périphérique a une largeur inférieure à 25% d'un rayon du disque.

9. Disque isolant de l'électricité selon l'une quelconque des revendications 1 à 8, **caractérisé en ce que**, sur chaque face principale, la dépression centrale a une profondeur comprise entre 10% et 20% de l'épaisseur du disque.

10. Disque isolant de l'électricité selon l'une quelconque des revendications 1 à 9, **caractérisé en ce que**, sur chaque face principale, la dépression périphérique (6) a une profondeur comprise entre 5% et 10% de l'épaisseur du disque.

11. Ensemble électrique comprenant au moins un conducteur (15) linéaire, un disque (1) isolant ayant un perçage (4) traversé par le conducteur linéaire et soutenant le conducteur (15) dans une enceinte (16, 17), et une paire de brides (18, 19) assemblées entre elles et entre lesquelles un bord du disque est retenu, le disque étant séparé des brides par des jeux et comprenant une dépression centrale (5) sur chacune de deux faces principales (2, 3), des électrodes (22, 23) saillant autour du conducteur (15) linéaire étant disposées devant les faces principales du disque, **caractérisé en ce que** la dépression centrale (5) s'étend autour du perçage (4) et autour des électrodes en direction radiale.

12. Ensemble électrique selon la revendication 11, **caractérisé en ce que** le disque est conforme à l'une quelconque des revendications 1 à 10.

13. Ensemble électrique selon la revendication 11 ou 12, et le disque étant conforme à la revendication 2, **caractérisé en ce que** les électrodes (22, 23) sont en appui sur les collerettes intérieures (8).

14. Ensemble électrique selon la revendication 13, **caractérisé en ce qu'**un joint élastique (28) est comprimé entre une des collerettes intérieures et une des électrodes.

15. Ensemble électrique selon la revendication 14, **caractérisé en ce que** l'électrode contre laquelle le joint élastique est comprimé est pourvue d'un chanfrein conique en dépouille vers le conducteur linéaire, et le joint est retenu dans un logement à section triangulaire et comprimé aussi contre le conducteur linéaire.

16. Ensemble électrique selon l'une quelconque des revendications 13 à 14, **caractérisé en ce que** le conducteur linéaire traverse le perçage du disque avec un jeu.

17. Ensemble électrique selon l'une quelconque des revendications 13 à 16, **caractérisé en ce que** les électrodes ont une partie externe (37) saillante en direction du disque et débordant autour de la collerette intérieure dans la dépression centrale.

18. Ensemble électrique selon l'une quelconque des revendications 11 à 17, **caractérisé par** une rainure d'éventement (29) disposée le long du perçage central du disque, et un perçage (30) prolongeant la rainure d'éventement situé à travers une des électrodes et débouchant dans un volume libre.

19. Ensemble électrique selon l'une quelconque des revendications 11 à 18, **caractérisé en ce que** le bord du disque comprend des perçages périphériques (10) recevant des tubes (21) de support, les tubes de support étant en butée sur les brides (18, 19), et des boulons de serrage (20) traversent les brides et les tubes de support.

20. Ensemble électrique selon la revendication 19 et le disque étant conforme à la revendication 3, **caractérisé en ce que** les collerettes extérieures (9) sont en appui sur les brides (18, 19).

21. Ensemble électrique selon la revendication 20, **caractérisé en ce que** les collerettes extérieures (9) ont une largeur, en dimension radiale, choisie pour que les collerettes extérieures (9) résistent à des efforts axiaux s'exerçant sur le disque (1) tout en se déformant en service sans produire de déformation plastique sur les boulons de serrage (20).

22. Ensemble électrique selon la revendication 21, **caractérisé en ce que** les collerettes extérieures entourent des joints d'étanchéité (31) entre le disque et les brides.

23. Ensemble électrique selon la revendication 22, **caractérisé par** des entailles radiales (32) sur les faces principales du disque, qui passent sous des lèvres internes du joint d'étanchéité, pour éventer des volumes compris entre les joints d'étanchéité et le disque.

## Patentansprüche

1. Elektrisch isolierende Scheibe (1), die zum Tragen wenigstens eines linearen Leiters (15) in einem elektrischen Mittel- oder Hochspannungsgerät ausgelegt ist, das ferner ein Gehäuse (16, 17) zum Stützen der Scheibe umfasst, sowie Elektroden (22, 23), die um den Leiter (15) herum vorstehen, wobei die Scheibe wenigstens eine zentrale Bohrung (4) für den linearen Leiter sowie zwei entgegengesetzte Hauptflächen (2, 3) umfasst, vor denen sich die Elektroden (22, 23) erstrecken, wobei die entgegengesetzten Flächen im Wesentlichen eben sind, mit Ausnahme einer zentralen Vertiefung (5) und einer Umfangsvertiefung (6), die sich an einem Rand der Scheibe erstreckt, **dadurch gekennzeichnet, dass** die zentrale Vertiefung (5) sich um die Bohrung (4) und um die Elektroden in radialer Richtung erstreckt.

2. Elektrisch isolierende Scheibe nach Anspruch 1, **dadurch gekennzeichnet, dass** sie einen Innenkragen (8) umfasst, der zwischen der Bohrung und der zentralen Vertiefung angeordnet ist.

3. Elektrisch isolierende Scheibe nach einem der Ansprüche 1 oder 2, **dadurch gekennzeichnet, dass** sie einen Außenkragen (9) umfasst, der auf der Umfangsvertiefung angeordnet ist.

4. Elektrisch isolierende Scheibe nach Anspruch 2, **dadurch gekennzeichnet, dass** die zentrale Vertiefung eine konische Außenfläche (14, 14'), eine Bodenfläche (13, 13') und eine Innenfläche (12, 12') umfasst.

5. Elektrisch isolierende Scheibe nach Anspruch 4, **dadurch gekennzeichnet, dass** die Bodenfläche (13) eben ist.

6. Elektrisch isolierende Scheibe nach einem der Ansprüch 1 bis 5, **dadurch gekennzeichnet, dass** der Abstand zwischen einem Leiter, der durch die zentrale Bohrung hindurch verläuft, und einer Außenfläche (14) der zentralen Vertiefung kleiner als 15% eines Radius der Scheibe ist.

7. Elektrisch isolierende Scheibe nach einem der vorhergehenden Ansprüche, **dadurch gekennzeichnet, dass** sie eine Mehrzahl von zentralen Bohrungen (4) umfasst, jedoch nur eine einzige zentrale Vertiefung (5'), die all die zentralen Bohrungen umgibt.

8. Elektrisch isolierende Scheibe nach einem der Ansprüche 1 bis 7, **dadurch gekennzeichnet, dass** die Umfangsvertiefung eine Breite kleiner als 25% eines Radius der Scheibe hat.

9. Elektrisch isolierende Scheibe nach einem der Ansprüche 1 bis 8, **dadurch gekennzeichnet, dass** auf jeder Hauptfläche die zentrale Vertiefung eine Tiefe aufweist, die zwischen 10% und 20% der Dicke der Scheibe enthalten ist.

10. Elektrisch isolierende Scheibe nach einem der Ansprüche 1 bis 9, **dadurch gekennzeichnet, dass** auf jeder Hauptfläche die Umfangsvertiefung (6) eine Tiefe hat, die zwischen 5% und 10% der Dicke der Scheibe enthalten ist.

11. Elektrische Anordnung, umfassend wenigstens einen linearen Leiter (15), eine isolierende Scheibe (1) mit einer Bohrung (4), die von dem linearen Leiter durchsetzt wird, und die den Leiter (15) in einem Gehäuse (16, 17) stützt, sowie ein Paar von Flanschen (18, 19), die aneinander angebracht sind und zwischen denen ein Rand der Scheibe gehalten ist, wobei die Scheibe von den Flanschen durch ein jeweiliges Spiel separiert ist, und eine zentrale Vertiefung (5) auf jeder von zwei Hauptflächen (2, 3) umfasst, wobei Elektroden (22, 23), die um den linearen Leiter (15) herum vorstehen, vor den Hauptflächen der Scheibe angeordnet sind, **dadurch gekennzeichnet, dass** die zentrale Vertiefung (5) sich um die Bohrung (4) und um die Elektroden herum in radialer Richtung erstreckt.

12. Elektrische Anordnung nach Anspruch 11, **dadurch gekennzeichnet, dass** die Scheibe einem der Ansprüche 1 bis 10 entspricht.

13. Elektrische Anordnung nach Anspruch 11 oder 12, wobei die Scheibe Anspruch 2 entspricht, **dadurch gekennzeichnet, dass** die Elektroden (22, 23) in Anlage an den Innenkrägen (8) sind.

14. Elektrische Anordnung nach Anspruch 13, **dadurch gekennzeichnet, dass** eine elastische Dichtung (28) zwischen einem der Innenkrägen und einer der Elektroden komprimiert ist.

15. Elektrische Anordnung nach Anspruch 14, **dadurch gekennzeichnet, dass** die Elektrode, gegen die die elastische Dichtung komprimiert ist, mit einer konischen Abfasung mit einer Schräge hin zum linearen Leiter versehen ist, und dass die Dichtung in einer Aufnahme mit dreieckigem Querschnitt gehalten und ebenfalls gegen den linearen Leiter komprimiert ist.

16. Elektrische Anordnung nach einem der Ansprüche 13 bis 14, **dadurch gekennzeichnet, dass** der lineare Leiter die Bohrung der Scheibe mit einem Spiel durchsetzt.

17. Elektrische Anordnung nach einem der Ansprüche 13 bis 16, **dadurch gekennzeichnet, dass** die Elektroden einen Außenbereich (37) aufweisen, der in Richtung der Scheibe vorsteht und um den Innenkragen herum in die zentrale Vertiefung übersteht.

18. Elektrische Anordnung nach einem der Ansprüche 11 bis 17, **gekennzeichnet durch** eine Entlüftungsrille (29), die entlang der zentralen Bohrung der Scheibe angeordnet ist, und eine Bohrung (30), die die Entlüftungsrille verlängert und die **durch** eine der Elektroden hindurch und in ein freies Volumen mündend angeordnet ist.

19. Elektrische Anordnung nach einem der Ansprüche 11 bis 18, **dadurch gekennzeichnet, dass** der Rand der Scheibe Umfangsbohrungen (10) umfasst, die Tragrohre (21) aufnehmen, wobei die Tragrohre an den Flanschen (18, 19) anliegen, und wobei Spannbolzen (20) die Flansche und die Tragrohre durchsetzen.

20. Elektrische Anordnung nach Anspruch 19, wobei die Scheibe Anspruch 3 entspricht, **dadurch gekennzeichnet, dass** die Außenkrägen (9) an den Flanschen (18, 19) anliegen.

21. Elektrische Anordnung nach Anspruch 20, **dadurch gekennzeichnet, dass** die Außenkrägen (9) in radialer Abmessung eine Breite aufweisen, die derart gewählt ist, dass die Außenkrägen (9) Axialkräften widerstehen, die auf die Scheibe (1) ausgeübt werden, wobei sie sich im Einsatz verformen, ohne eine plastische Verformung bei den Spannbolzen (20) zu bewirken.

22. Elektrische Anordnung nach Anspruch 21, **dadurch gekennzeichnet, dass** die Außenkrägen Abdichtungsdichtungen (31) zwischen der Scheibe und den Flanschen umgeben.

23. Elektrische Anordnung nach Anspruch 22, **gekennzeichnet durch** radiale Kerben (32) auf den Hauptflächen der Scheibe, die unter Innenlippen der Abdichtungsdichtung verlaufen, um Volumina zu entlüften, die zwischen den Abdichtungsdichtungen und der Scheibe enthalten sind.

## Claims

1. An electricity insulator disk (1) for supporting at least one linear conductor (15) in a medium or high voltage electrical apparatus that further includes a chamber (16, 17) for holding the disk and electrodes (22, 23) protruding around the conducts (15), the disk having at least one central through hole (4) for said linear conductor and two opposite main faces (2, 3) before which said electrode extend, said opposite faces being essentially flat except for a central recess (5) and a peripheral recess (6) extending in an edge portion of the disk, **characterized in that** the central recess (5) extends around the through hole (4) and around the electrodes in a radial direction.

2. An insulator disk according to claim 1, **characterized in that** it includes an inner collar portion (8) disposed between the through hole and the central recess.

3. An insulator disk according to claim 1 or claim 2, **characterized in that** it includes an outer collar portion (9) disposed on the peripheral recess.

4. An insulator disk according to claim 2, **characterized in that** the central recess has a conical outer face (14, 14'), a bottom face (13, 13') and an inner face (12, 12').

5. An insulator disk according to claim 4, **characterized in that** the bottom face (13) is flat.

6. An insulator disk according to any one of claims 1 to 5, **characterized in that** the distance between a conductor extending through the central through hole and an outer face (14) of the central recess is less than 15% of a radius of the disk.

7. An insulator disk according to any preceding claim, **characterized in that** it has a plurality of central through holes (4) but only one central recess (5'), that contains all of the central through holes.

8. An insulator disk according to any one of claims 1 to 7, **characterized in that** the peripheral recess has a width of less than 25% of a radius of the disk.

9. An insulator disk according to any one of claims 1 to 8, **characterized in that**, on each main face, the central recess has a depth in the range 10% to 20% of the thickness of the disk.

10. An insulator disk according to any one of claims 1 to 9, **characterized in that**, on each main face, the peripheral recess (6) has a depth in the range 5% to 10% of the thickness of the disk.

11. An electrical assembly comprising at least one linear conductor (15), an insulator disk (1) having a through hole (4) through which the linear conductor extends and supporting the conductor (15) in a chamber (16, 17), and a pair of flanges (18, 19) assembled together with an edge portion of the disk retained therebetween, the disk being separated from the flanges by clearance and having, on each of two main faces (2, 3) of the disk, a central recess (5), electrodes (22, 23) protruding around the linear conductor (15) being disposed in front of the main faces of the disk, **characterized in that** the central recess (5) extends around the through hole (4) and around the electrodes in a radial direction.

12. An electrical assembly according to claim 11, **characterized in that** the disk is a disk according to any one of claims 1 to 10.

13. An electrical assembly according to claim 11 or claim 12 in which the disk is a disk according to claim 2, **characterized in that** the electrodes (22, 23) are in engagement on the inner collar portions (8).

14. An electrical assembly according to claim 13, **characterized in that** an elastic sealing ring (28) is compressed between one of the inner collar portions and one of the electrodes.

15. An electrical assembly according to claim 14, **characterized in that** the electrode against which the elastic sealing ring is compressed has a conical chamfer deepening towards the linear conductor, and the sealing ring is held in a seating of triangular cross section and is further compressed against the linear conductor.

16. An electrical assembly according to claim 13 or claim 14, **characterized in that** the linear conductor extends with a clearance through said through hole in the disk.

17. An electrical assembly according to any one of claims 13 to 16, **characterized in that** the electrodes have an outer portion (37) that projects towards the disk and overlaps around the inner collar portion into the central recess.

18. An electrical assembly according to any one of claims 11 to 17, **characterized by** a venting groove (29) disposed along the central through hole of the disk, with the venting groove being extended in length by an aperture (30) defined through one of the electrodes to open into a free space.

19. An electrical assembly according to any one of claims 11 to 18, **characterized in that** said edge portion of the disk is formed with peripheral through holes (10) **in that** support tubes (21) are received, with the support tubes being in abutment on said flanges (18, 19), and with fastening bolts (20) extending through the flanges and support tubes.

20. An electrical assembly according to claim 19, in which the disk is configured in accordance with claim 3, **characterized in that** the outer collar portions (9) are in abutment on the flanges (18, 19).

21. An electrical assembly according to claim 20, **characterized in that** the outer collar portions (9) have a radial width that is so selected that the outer collar portions (9) will withstand axial forces exerted on the disk (1), while being deformable in use without causing plastic deformation of the fastening bolts (20).

22. An electrical assembly according to claim 21, **characterized in that** the outer collar portions surround sealing rings (31) between the disk and the flanges.

23. An electrical assembly according to claim 22, **characterized by** radial grooves (32) on the main faces of the disk, that extend under internal lips of the sealing ring, whereby to vent spaces defined between the sealing rings and the disk.
